# EUROPEAN PATENT SPECIFICATION

(11) **EP 1 672 871 B1**
(45) Date of publication and mention of the grant of the patent: **18.11.2009**
(21) Application number: 05027542.9
(22) Date of filing: 15.12.2005
(51) Int. Cl.: G06F 21/00

(54) **Trust based relationships**
Beziehungen auf Vertrauensbasis
Relations basées sur la confiance

(30) Priority: 16.12.2004 US 16605
(43) Date of publication of application: 21.06.2006
(73) Proprietor: SAP AG, 69190 Walldorf (DE)
(72) Inventor: Kreyscher, Martin, 69117 Heidelberg (DE); Thommes, Christoph A., 69198 Schriesheim (DE)
(74) Representative: Müller-Boré & Partner Patentanwälte

(56) References cited:
- US-A1- 2002 091 667
- US-A1- 2002 178 119
- US-A1- 2004 034 799
- US-B1- 6 535 879

## Description

### BACKGROUND

The following disclosure relates to data processing by digital computer, such as that performed by information management systems.

A company may find it advantageous to make various types of information available on demand to certain users, including employees and select individuals who are not directly affiliated with the company. In order to do so, the company can establish a portal, or a virtual room, that is accessible to such users. Information that is relevant to some or all of the users can be made available in the portal, thereby allowing the portal users to access the information as needed. For example, a company can establish an external-facing portal, that is, a portal that is exposed to entities outside of the enterprise, which can be used to share information between company users, or internal users, and users from outside of the company, or external users. In this manner, company users may collaborate with one or more external users, such as suppliers, regarding pending orders, delivery schedules, payments, and other details.

By establishing an external-facing portal, however, the company incurs a risk that both privacy and security will be compromised. For example, an external user may be able to identify one or more internal users or access information relating to internal users. Moreover, an external user associated with one of the company's suppliers may be able to identify one or more users associated with another of the company's suppliers or access information relating to the other supplier. Therefore, the company must take steps to ensure that the privacy of portal users and the security of information made available in the portal are maintained.

Depending on the company's needs, each user can be assigned various rights or permissions that define the user's ability to search for and see other portal users, the user's level of access to information made available in the portal, and the user's right to manipulate information made available in the portal. The company can thereby control each user's access and tailor privacy and security settings. For example, an external user associated with a particular supplier may be assigned permissions such that she can only see and search for other external users who are associated with the same supplier and internal users who have been designated as points of contact for that supplier. The external user associated with the particular supplier can similarly be assigned permissions such that she can only access and modify information that relates specifically to that supplier and information that is generally available to all users.

Although rights and permissions in a portal can be administered on the user and document level, this practice is often labor intensive and can substantially increase the amount of time required to provide a new user with access to the portal or to make new items of information available in the portal. Additionally, manually administering the rights and permissions in a portal is costly and can result in a high number of errors.

US 6,535,879 B1 discloses a property-based access control for a computer system that controls access to directory entries in a computer environment based on an access control command defined by a system administrator. This access control command specifies the type of access to be granted to the user. The access control command further lists the attributes values that the administrator has selected for user access and specifies the desired attribute values that the user must have to be granted said type of access.

Thus, according to an aspect, it is an object to facilitate administration of access rights to shared information of different users in a portal system.

This problem is solved by a computer program product, a computer-implemented method and a system according claim 1, 10 and 16, respectively. Preferred embodiments are defined in the dependent subclaims.

### SUMMARY

The following discloses methods and apparatus, including computer program products, that implement techniques for automatically managing permissions in information management systems.

In general, in one aspect, the techniques can be implemented using a software product tangibly embodied in a machine-readable medium, the software product comprising instructions operable to cause one or more data processing apparatus to perform operations comprising detecting one or more trusted attribute values associated with a first user of a portal, determining a trust based relationship status by comparing the detected one or more trusted attribute values associated with the first user with one or more trusted attribute values associated with a second user of the portal in accordance with a trusted attributes configuration comprising an asymmetric trusted attribute comparison, and assigning one or more permissions to the first user based on the determined trust based relationship status.

The techniques can be implemented such that the portal comprises an external facing portal. Further, the techniques can be implemented to include using a software product comprising instructions operable to cause one or more data processing apparatus to perform operations comprising assigning one or more permissions to the second user based on the determined trust based relationship status. The techniques also can be implemented to include using a software product comprising instructions operable to cause one or more data processing apparatus to perform operations comprising controlling the ability of the first user to access information made available in the portal based on the one or more permissions assigned to the first user. The techniques can further be implemented to include using a software product comprising instructions operable to cause one or more data processing apparatus to perform operations comprising controlling the ability of the first user to see the second user based on the one or more permissions assigned to the first user.

The techniques also can be implemented to include using a software product comprising instructions operable to cause one or more data processing apparatus to perform operations comprising comparing one or more trusted attribute values associated with the first user with one or more trusted attribute values associated with a plurality of users of the portal, and determining the trust based relationship status between the first user and each of the plurality of users. Further, the techniques can be implemented to include using a software product comprising instructions operable to cause one or more data processing apparatus to perform operations comprising assigning one or more permissions to the first user based on each determined trust based relationship status.

The techniques also can be implemented to include using a software product comprising instructions operable to cause one or more data processing apparatus to perform operations comprising identifying a plurality of users of the portal who share a common trusted attribute value and creating a virtual group comprised of the plurality of users. Further, the techniques can be implemented such that a user can belong to a plurality of virtual groups.

In general, in another aspect, the techniques can be implemented to include detecting one or more trusted attribute values associated with a first user of a portal, determining a trust based relationship status by comparing the detected one or more trusted attribute values associated with the first user with one or more trusted attribute values associated with a second user of the portal in accordance with a trusted attributes configuration comprising an asymmetric trusted attribute comparison, and assigning one or more permissions associated with the first user based on the determined trust based relationship status.

The techniques also can be implemented to include controlling the ability of the first user to access information made available in the portal based on the one or more permissions assigned to the first user. Further, the techniques can be implemented to include controlling the ability of the first user to see the second user based on the one or more permissions assigned to the first user. The techniques also can be implemented to include comparing one or more trusted attribute values associated with the first user with one or more trusted attribute values associated with a plurality of users of the portal, and determining the trust based relationship status between the first user and each of the plurality of users. Further, the techniques can be implemented to include assigning one or more permissions to the first user based on each determined trust based relationship status. Additionally, the techniques can be implemented to include identifying a plurality of users of the portal who share a common trusted attribute value and creating a virtual group comprised of the plurality of users.

In general, in another aspect, the techniques can be implemented as a system comprising one or more communication paths to permit a plurality of users to connect to a portal and a software product tangibly embodied in a machine-readable medium, the software product comprising instructions operable to cause one or more data processing apparatus to perform operations comprising detecting one or more trusted attribute values associated with a first user of the portal, determining a trust based relationship status by comparing the detected one or more trusted attribute values associated with the first user with one or more trusted attribute values associated with a second user of the portal in accordance with a trusted attributes configuration comprising an asymmetric trusted attribute comparison, and assigning one or more permissions to the first user based on the determined trust based relationship status.

The techniques also can be implemented such that the software product further comprises instructions operable to cause the one or more data processing apparatus to perform operations comprising controlling the ability of the first user to access information made available in the portal based on the one or more permissions assigned to the first user. The techniques can further be implemented such that the software product further comprises instructions operable to cause the one or more data processing apparatus to perform operations comprising controlling the ability of the first user to see the second user based on the one or more permissions assigned to the first user. Additionally, the techniques can further be implemented such that the software product further comprises instructions operable to cause the one or more data processing apparatus to perform operations comprising comparing one or more trusted attribute values associated with the first user with one or more trusted attribute values associated with a plurality of users of the portal and determining the trust based relationship status between the first user and each of the plurality of users. Further, the techniques can be implemented such that the software product further comprises instructions operable to cause the one or more data processing apparatus to perform operations comprising assigning one or more permissions to the first user based on each determined trust based relationship status.

The techniques described in this specification can be used to realize one or more of the following advantages. The techniques can be used to implement an information management portal that automatically establishes and enforces user permissions. Such a system can reduce an administrator's workload by eliminating the need for an administrator to manually establish permissions for each portal user and each item of information made available in the portal. Such a system also can reduce the amount of time required to grant new users access to a portal and to introduce new information into the portal. Further, by automatically establishing and enforcing permissions, such a system can reduce the time required to modify privacy and security settings. The advantages described above, taken together or individually, serve to reduce the total cost of operating a portal and improve privacy and security. One implementation provides all of the above advantages.

These general and specific aspects can be implemented using a computer program, a method, a system or apparatus, or any combination of computer programs, methods, or systems. The details of one or more implementations are set forth in the accompanying drawings and the description below. Further features, aspects, and advantages will become apparent from the description, the drawings, and the claims.

### BRIEF DESCRIPTION OF THE DRAWINGS

FIG. 1 is a block diagram showing a portal system.

FIG. 2 is a block diagram showing information made available in a portal system.

FIG. 3 is a block diagram showing trusted attributes associated with a plurality of portal users.

FIG. 4 shows a trusted attributes configuration.

FIGS. 5-7 show trust based relationships between portal users.

FIG. 8 illustrates a flowchart for automatically assigning permissions to a portal user.

Like reference numbers and designations in the various drawings indicate like elements.

### DETAILED DESCRIPTION

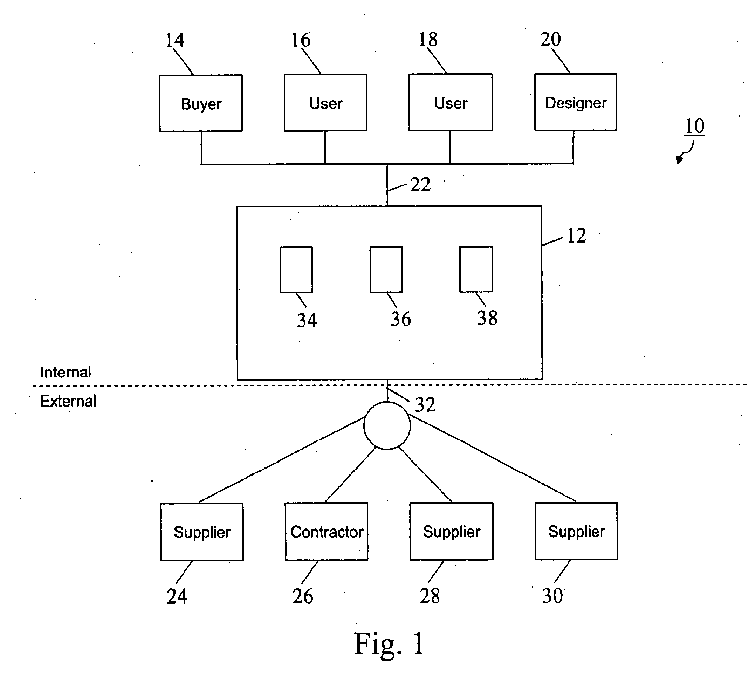

Referring to FIG. 1, in an implementation, the portal system 10 includes a portal 12 that provides a location at which one or more users can access one or more items of information. Because the portal system 10 supports connections by internal users and external users, the portal 12 comprises an external facing portal. Users who are members of the host or are directly affiliated with the host, such as the employees of a company or other such organization, are said to be internal users. All other users, such as suppliers or independent contractors, are said to be external users. In another implementation, the portal system 10 can be configured such that it only supports connections from within the host and the portal 12 comprises an internal facing portal. In such an implementation, a first set of users, such as employees associated with a particular department, can be considered internal users and a second set of users, such as employees from one or more other departments, can be considered external users.

As shown in FIG. 1, the portal system 10 includes a plurality of internal users 14, 16, 18, and 20 who are located within the host. The internal users 14, 16, 18, and 20 can access the portal 12 through a communications path 22 that is also internal to the host. For example, the host's employees can access the portal 12 over a private network, such as a local area network (LAN), a campus area network (CAN), or a wide area network (WAN). Further, a plurality of external users 24, 26, 28, and 30 who are located outside of the host can access the portal 12 via an interface 32 with an external communications path. For example, a supplier 24 may access the portal 12 through a public communications network, such as the Internet.

The portal 12 can be configured to store one or more items of information 34, 36, and 38 that portal users can access on demand, provided the requesting user has been assigned the permissions needed to access the information. For example, a buyer 14 can generate a purchase order 34 that details one or more items that are to be provided by a first supplier 24. The purchase order 34 can then be made available through the portal 12. The first supplier 24 can then access the portal 12 and view the purchase order 34 at a convenient time. Further, once the purchase order 34 has been filled, the first supplier 24 can modify the purchase order 34 to indicate that the order has been completed. Additionally, the first supplier 24 can store an invoice 36 in the portal 12 requesting payment of the amount due from the buyer 14. By way of further example, a designer 20 who is internal to the host can use the portal 12 to collaborate on a project, such as a design presentation, with a contractor 26 who is external to the host. Through the portal 12, the designer 20 and the contractor 26 can access the design presentation and share ideas in real-time.

Because the portal 12 can be accessed by a plurality of users, and particularly because some portal users are not members of or directly affiliated with the host, it is possible for the privacy of portal users and the security of information made available in the portal 12 to be compromised. However, it is difficult to implement access levels and privacy guidelines on an individual basis, and to administer permissions on a document or business object attribute level using access control lists. Therefore, each of the portal users can be assigned an access level depending upon their status.

The portal system 10 can assign an "unrestricted" access level to internal users who are members of or are directly affiliated with the host, such as company employees. A user with an unrestricted access level is assigned one or more permissions that permit the user to search for and see all other portal users. A user with an unrestricted access level also can be assigned one or more permissions that permit the user to view additional information, such as sensitive information, made available in the portal 12. In another implementation, the unrestricted access level can be reserved for a select group of internal users and all other internal users can be assigned a restricted access level, which is discussed below.

Conversely, external users who are not known to the host, such as anonymous users or self-registered users, can be assigned a "none" access level by the portal system 10. A user with a none access level is not assigned any permissions that would permit the user to see or search for other portal users. A user with a none access level is also not assigned any permissions that would permit the user to view sensitive information that is made available in the portal 12. A user with a none access level is only permitted to view general information that is made available in the portal 12 to all users.

External users who are known to the host comprise an intermediate class of users. Such known external users can be assigned a "restricted" access level by the portal system 10. A user with a restricted access level can be assigned one or more permissions if the portal system 10 determines that a relationship, such as a trust based relationship, exists between the restricted user and one or more other users. A restricted user can thus be permitted to search for and see specific other portal users, based on the restricted user's existing relationships. Further, a restricted user's existing relationships also can be used to permit the restricted user to view items of sensitive information in the portal 12 that are not made available to all viewers. However, the restricted user's permissions extend only so far as that user's existing relationships and the restricted user will be prevented from seeing or searching for portal users and information that exceed the limits of the existing relationships. Once the existing relationships have been determined for a restricted user, the portal system 10 can automatically assign one or more privacy and security permissions to that restricted user.

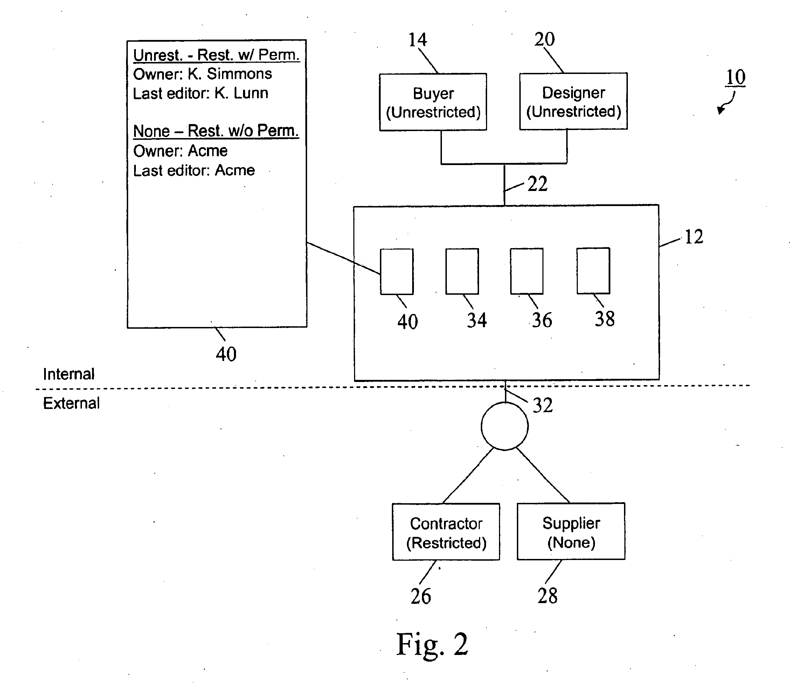

FIG. 2 illustrates that portal users who are assigned different access levels will have different abilities to view the information that is made available in the portal 12. The internal users in the portal system 10, such as the buyer 14 and the designer 20, have each been assigned an unrestricted access level. Therefore, the buyer 14 and the designer 20 can access all of the information made available in the portal 12. For example, a white paper 40 made available in the portal 12 includes public information that can be viewed by all users, such as general text. The white paper 40 also includes sensitive information, such as ownership and editing information, that can only be viewed by users who have been assigned the appropriate permissions. If the designer 20 views the white paper 40, the designer's 20 unrestricted access level will permit her to see that the white paper 40 is owned by K. Simmons and that it was last edited by K. Lunn.

The supplier 28, however, is an external user who is not known to the host and has been assigned a none access level by the portal system 10. As such, the supplier 28 has limited access to the information that has been made available in the portal 12. Although the white paper 40 can be viewed by all portal users, access to the sensitive information associated with the white paper 40, such as the ownership and editing information, is restricted. Therefore, if the supplier 28 attempts to view the sensitive information associated with the white paper 40, he will only be permitted to see that the white paper 40 is owned by Acme and that it was lasted edited by Acme.

Displaying generic placeholders, such as the company name "Acme", to users with a none access level and to restricted users who do not have permission to view sensitive information serves to protect the identity of the portal users who are associated with the document. In addition to viewing information, as the buyer 14 and the designer 20 are unrestricted users, they will each be able to search the portal and see all of the other portal users. However, because the supplier 28 has a none access level, the supplier 28 will not be able to see any other portal users.

Although the contractor 26 is also an external user, the contractor 26 is known to the host and therefore has been assigned a restricted access level. As such, the contractor 26 will also be able to view the public information included in the white paper 40. However, unlike the supplier 28, the portal system 10 can assign one or more permissions to the contractor 26 to permit the contractor 26 to view at least a portion of the sensitive information associated with the white paper 40. Additionally, the portal system 10 can also assign one or more permissions that will allow the contractor 26 to search for and see at least a portion of the other portal users. The portal system 10 determines which permissions to assign the contractor 26 based on the existing trust based relationships to which the contractor 26 is a party.

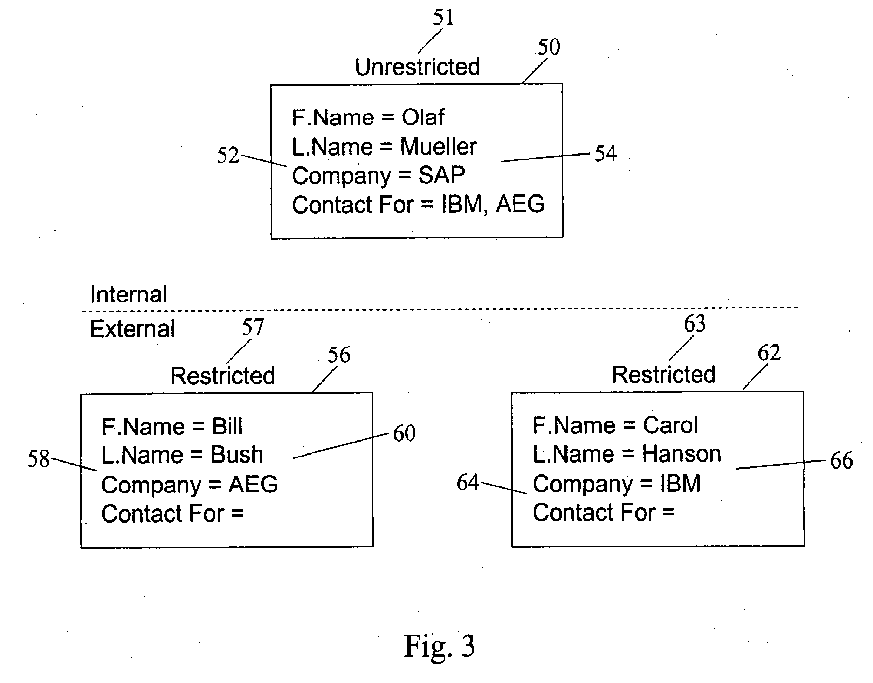

One or more trusted attribute values are associated with each portal user, the trusted attribute values corresponding to specific trusted attribute fields. FIG. 3 shows trusted attribute values 54 associated with the internal user named "Olaf Mueller" 50. The trusted attribute values 54 include Olaf, Mueller, SAP, and IBM, AEG. The trusted attribute values 54 correspond to the trusted attribute fields 52 F.Name, L.Name, Company, and Contact For, respectively. Any number of trusted attribute values can be associated with a particular user. As discussed above, because the internal user 50 has been assigned an unrestricted access level 51, the internal user 50 can see both of the external users 56 and 62.

Similarly, the trusted attribute values 60 associated with the external user named "Bill Bush" 56 include Bill, Bush, and AEG. The trusted attribute values 60 correspond to the trusted attribute fields 58 F.Name, L.Name, and Company, respectively. Additionally, the trusted attribute values 66 associated with the external user named "Carol Hanson" 62 include Carol, Hanson, and IBM. The trusted attribute values 66 correspond to the trusted attribute fields 64 F.Name, L.Name, and Company, respectively.

Because the external users 56 and 62 have each been assigned a restricted access level 57 and 63, the portal system 10 must assign each of them one or more permissions based on the determination of at least one trust based relationship before the external users 56 and 62 will be permitted to see any other portal users or access any of the sensitive data made available in the portal 12. Both of the external users 56 and 62 have a null value for the trusted attribute value that corresponds to the trusted attribute field Contact For. However, a trust based relationship cannot be determined to exist between two portal users on the basis of a common null value.

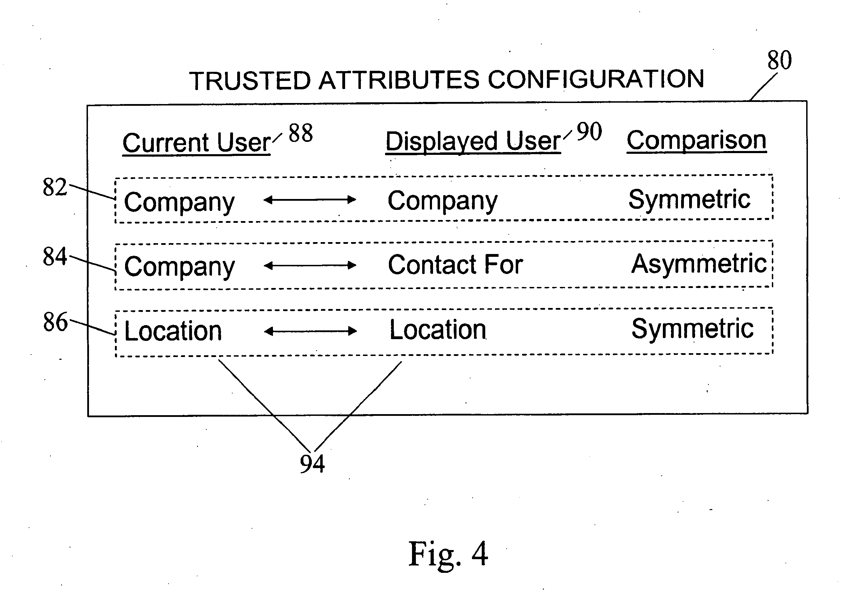

In order to determine whether a trust based relationship exists between two portal users, the trusted attribute values associated with the two portal users must be compared. FIG. 4 presents a trusted attributes configuration 80 that includes a plurality of trusted attribute comparisons 82, 84, and 86. The portal system 10 can include one or more trusted attributes configurations. Further, each trusted attributes configuration can include any number of trusted attribute comparisons. Additionally, the portal system 10 can be configured to require that any number of trusted attribute comparisons result in a match before the permissions associated with a trust based relationship are assigned. For purposes of the following discussion, however, a trust based relationship is determined to exist if one or more trusted attribute comparisons result in a match.

Each of the trusted attribute comparisons 82, 84, and 86 included in the trusted attributes configuration 80 defines a trusted attribute associated with the current user 88 that is to be compared with a trusted attribute associated with the displayed user 90. Although the trusted attributes configuration uses the trusted attribute field or fields to identify the trusted attributes 94 that are to be compared, the actual comparison is performed using the trusted attribute values associated with the current user 88 and the displayed user 90. The current user 88 is the user for whom the trusted attribute comparison is being performed and the displayed user 90 is the portal user with whom the trust based relationship would be established. For any given current user 88, the trusted attribute comparisons 82, 84, and 86 can be performed for any or all of the portal users.

Referring to FIG. 4, the trusted attributes configuration 80 indicates that the first trusted attribute comparison 82 involves the trusted attribute value associated with the current user 88 that corresponds to the trusted attribute field "Company" and the trusted attribute value associated with the displayed user 90 that corresponds to the trusted attribute field "Company". If the trusted attribute value corresponding to the trusted attribute field "Company" associated with the current user 88 is the same as the trusted attribute value corresponding to the trusted attribute field "Company" associated with the displayed user 90, then the comparison is determined to be a match. Because the trusted attribute values involved in the first trusted attribute comparison 82 correspond to the same trusted attribute field, the first trusted attribute comparison 82 is characterized as symmetric.

The second trusted attribute comparison 84 indicated by the trusted attributes configuration 80 involves the trusted attribute value associated with the current user 88 that corresponds to the trusted attribute field "Company" and the trusted attribute value associated with the displayed user 90 that corresponds to the trusted attribute field "Contact For". If the trusted attribute value corresponding to the trusted attribute field "Company" associated with the current user 88 is the same as the trusted attribute value corresponding to the trusted attribute field "Contact For" associated with the displayed user 90, then the comparison results in a match. Because the trusted attribute values involved in the second trusted attribute comparison 84 represent different trusted attribute fields, the comparison is characterized as asymmetric.

The third trusted attribute comparison 86 indicated by the trusted attributes configuration 80 involves the trusted attribute values associated with the current user 88 and the displayed user 90 that correspond to the trusted attribute field "Location". As with the previous comparisons, if the trusted attribute values corresponding to the trusted attribute field "Location" associated with the current user 88 and the displayed user 90 are the same, then the comparison results in a match. Also as with the first trusted attribute comparison 82, because the trusted attribute values involved in the trusted attribute comparison 86 correspond to the same trusted attribute field, the trusted attribute comparison 86 is characterized as symmetric.

The portal system 10 determines the trust based relationship status between the current user 88 and the displayed user 90 based on the results of the trusted attribute comparisons 82, 84, and 86 that are conducted in accordance with the trusted attributes configuration 80. If a sufficient number of matches are found to exist between the current user 88 and the displayed user 90, then the trust based relationship status is positive and the portal system 10 determines that a trust based relationship exists between the current user 88 and the displayed user 90. The portal system 10 can then assign one or more permissions to the current user 88 in accordance with the trust based relationship. If the displayed user 90 is a restricted user, the portal system 10 can also assign one or more permissions to the displayed user 90 in accordance with the trust based relationship.

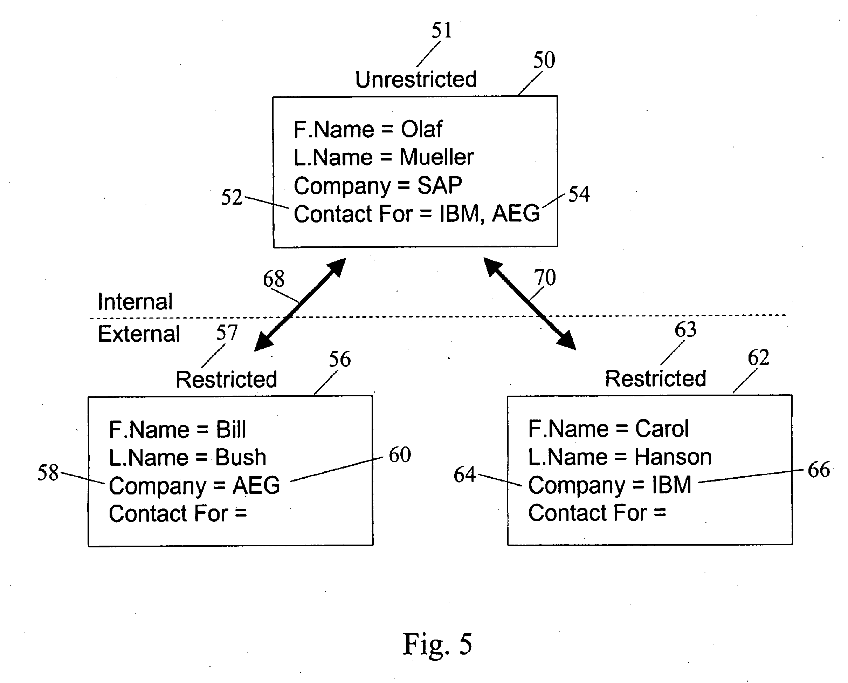

Referring to FIG. 5, a trust based relationship 68 is depicted between the unrestricted user named "Olaf Mueller" 50 and the restricted user named "Bill Bush" 56. The unrestricted user 50 is associated with the trusted attribute value "AEG" 54 that corresponds to the trusted attribute field "Contact For" 52 and the restricted user 56 is associated with the trusted attribute value "AEG" 60 that corresponds to the trusted attribute field "Company" 58. Therefore, the second trusted attribute comparison 84 in the trusted attributes configuration 80 is satisfied and a trust based relationship is found to exist between the users.

As a result of the trust based relationship that exists between the restricted user 56 and the unrestricted user 50, the portal system 10 assigns one or more permissions to the restricted user 56 that permit the restricted user 56 to search for and see the unrestricted user 50. Further, the portal system 10 assigns one or more permission that also permit the restricted user 56 to view sensitive information relating to the unrestricted user 50 that is made available in the portal 12. The portal system 10 does not assign any additional permissions to the unrestricted user 50, because the unrestricted user 50 has already been assigned an unrestricted access level.

A second trust based relationship is shown to exist between the unrestricted user named "Olaf Mueller" 50 and the restricted user named "Carol Hanson" 62. The unrestricted user 50 is associated with the trusted attribute value "IBM" 54 that corresponds to the attribute field "Contact For" 52 and the restricted user 62 is associated with the trusted attribute value "IBM" 66 that corresponds to the trusted attribute field "Company" 64. Therefore, the second trusted attribute comparison 84 in the trusted attributes configuration 80 is once again satisfied.

As a result of the trust based relationship that exists between the restricted user 62 and the unrestricted user 50, the portal system 10 assigns one or more permissions to the restricted user 62 that permit the restricted user 62 to search for and see the unrestricted user 50. Further, the portal system 10 assigns one or more permissions that also permit the restricted user 62 to view sensitive information relating to the unrestricted user 50 that is made available in the portal 12. Again, the portal system 10 does not assign any additional permissions to the unrestricted user 50, because the unrestricted user 50 has already been assigned an unrestricted access level. Additionally, because no trust based relationship was found to exist between the restricted users 56 and 62, the portal system 10 does not assign either of the restricted users 56 and 62 any permissions that would permit them to search for and see one another or view sensitive information relating to the other that is made available in the portal 12.

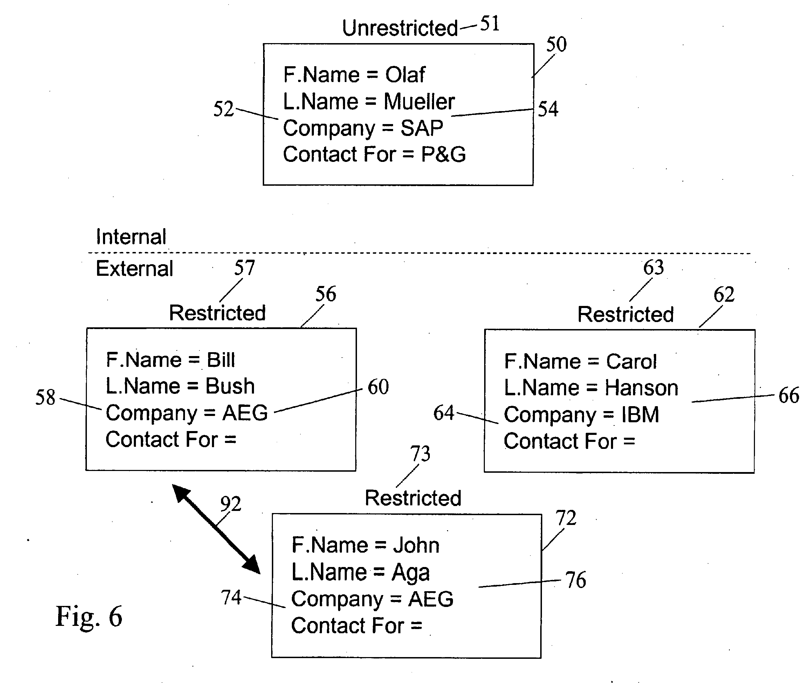

Trust based relationships also can be established between two or more restricted users. As shown in FIG. 6, a trust based relationship 92 exists between the restricted user named "Bill Bush" 56 and the restricted user named "John Aga" 72, each of whom is associated with the trusted attribute value "AEG" 60 and 76 that corresponds to the trusted attribute field "Company" 58 and 74 respectively. Thus, the first trusted attribute comparison 82 of the trusted attributes configuration 80 is satisfied. As a result of the trust based relationship 92, the portal system 10 assigns one or more permissions to each of the restricted users 56 and 72. Based on the assigned permissions, the restricted user named "Bill Bush" 56 is permitted to search for and see the restricted user named "John Aga" 72 and also to access sensitive information made available in the portal 12 that relates to the restricted user named "John Aga" 72. Based on similar assigned permissions, the restricted user named "John Aga" 72 is permitted to search for and see the restricted user named "Bill Bush" 56 and also to access sensitive information made available in the portal 12 that relates to the restricted user named "Bill Bush" 56.

As discussed above, a single portal user can be a party to a plurality of trust based relationships with a plurality of other users. Further, each such trust based relationship can be established without reference to any other existing, or potential, trust based relationships. Therefore, even though the single user is a party to a plurality of trust based relationships, the other parties to the single user's trust based relationships need not be involved in trust based relationships with one another. For example, an internal user can be a party to a trust based relationship with one or more external users who are representatives of a first supplier. The same internal user also can be a party to a trust based relationship with one or more external users who are representatives of a second, competing supplier. The trust based relationship between the internal user and the representatives of the first supplier exists independent of the trust based relationship between the internal user and the representatives of the second supplier, despite having the internal user in common. Therefore, the representatives of the first supplier will not be assigned any permissions that would permit them to see or access information relating to the representatives of the second supplier and the representatives of the second supplier will not be assigned any permissions that would permit them to see or access information relating to the representatives of the first supplier.

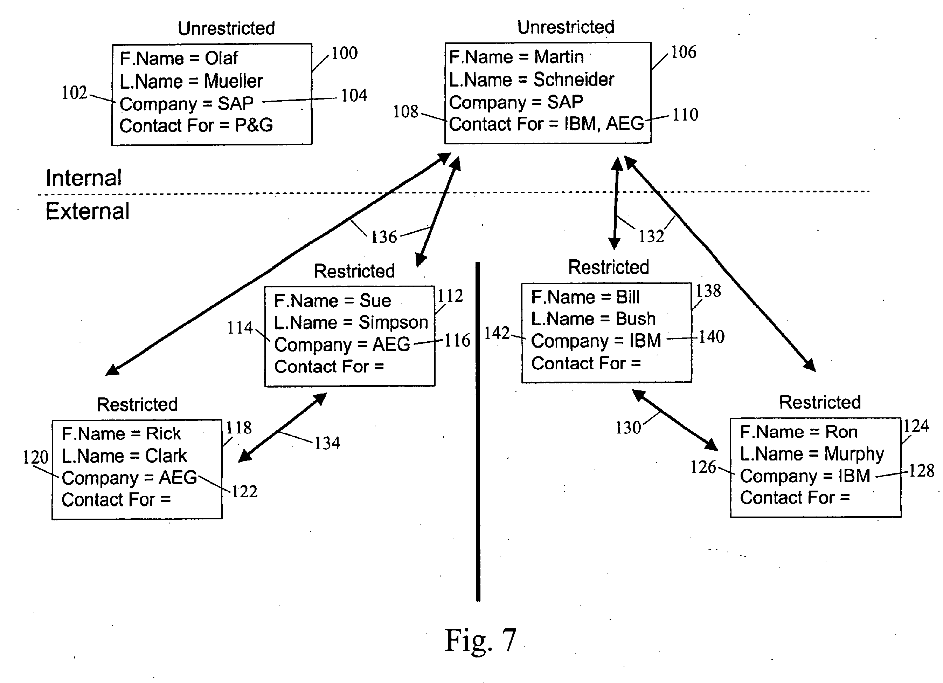

FIG. 7 depicts multiple trust based relationships existing between differing sets of portal users. The first trust based relationship 130 exists between the restricted user named "Ron Murphy" 124 and the restricted user named "Bill Bush" 138. Each of the restricted users 124 and 138 is associated with the trusted attribute value "IBM" 128 and 140 that corresponds to the trusted attribute field "Company" 126 and 142 respectively. As such, the first trusted attribute comparison 82 in the trusted attributes configuration 80 is satisfied.

A second trust based relationship 132 exists between the unrestricted user named "Martin Schneider" 106 and the restricted users named "Ron Murphy" 124 and "Bill Bush" 138. The unrestricted user 106 is associated with the trusted attribute value "IBM" 110 that corresponds to the trusted attribute field "Contact For" 108 and each of the restricted users 124 and 138 is associated with the trusted attribute value "IBM" 128 and 140 that corresponds to the trusted attribute field "Company" 126 and 142 respectively. As such, the second trusted attribute comparison 84 in the trusted attributes configuration 80 is satisfied.

Based upon the first and second trust based relationships, a common trust exists between the unrestricted user named "Martin Schneider" 106, the restricted user named "Ron Murphy" 124, and the restricted user named "Bill Bush" 138. As such, these users comprise a first virtual group. Each of the members of the first virtual group can search for and see each of the other members of the first virtual group. Additionally, each of the members of the first virtual group can view sensitive information made available in the portal 12 that relates to each of the other members.

A third trust based relationship 134 exists between the restricted user named "Rick Clark" 118 and the restricted user named "Sue Simpson" 112. Each of the restricted users 118 and 112 is associated with the trusted attribute value "AEG" 122 and 116 that corresponds to the trusted attribute field "Company" 120 and 114 respectively. As such, the first trusted attribute comparison 82 in the trusted attributes configuration 80 is satisfied.

A fourth trust based relationship 136 exists between the unrestricted user named "Martin Schneider" 106 and the restricted users named "Rick Clark" 118 and "Sue Simpson" 112. The unrestricted user 106 is associated with the trusted attribute value "AEG" 110 that corresponds to the trusted attribute field "Contact For" 108 and each of the restricted users 118 and 112 is associated with the trusted attribute value "AEG" 122 and 116 that corresponds to the trusted attribute field "Company" 120 and 114 respectively. As such, the second trusted attribute comparison 84 in the trusted attributes configuration 80 is satisfied.

Based upon the third and fourth trust based relationships, a common trust exists between the unrestricted user named "Martin Schneider" 106, the restricted user named "Rick Clark" 118, and the restricted user named "Sue Simpson" 112. As such, these users comprise a second virtual group. Each of the members of the second virtual group can search for and see each of the other members of the second virtual group. Additionally, each of the members of the second virtual group can view sensitive information made available in the portal 12 that relates to each of the other members.

Although the first virtual group and the second virtual group share a common member, the unrestricted user named "Martin Schneider" 106, the portal system 10 does not assign the restricted members of the first virtual group 124 and 138 any permissions that would permit them to see the members of the second virtual group or to view sensitive information relating to the members of the second virtual group. Similarly, the portal system 10 does not assign the restricted members of the second virtual group 118 and 112 any permissions that would permit them to see the members of the first virtual group or to view sensitive information relating to the members of the first virtual group. Therefore, the external facing portal system 10 can automatically assign permissions to a plurality of users in a manner that preserves the privacy of portal users and the security of information made available in the portal 12.

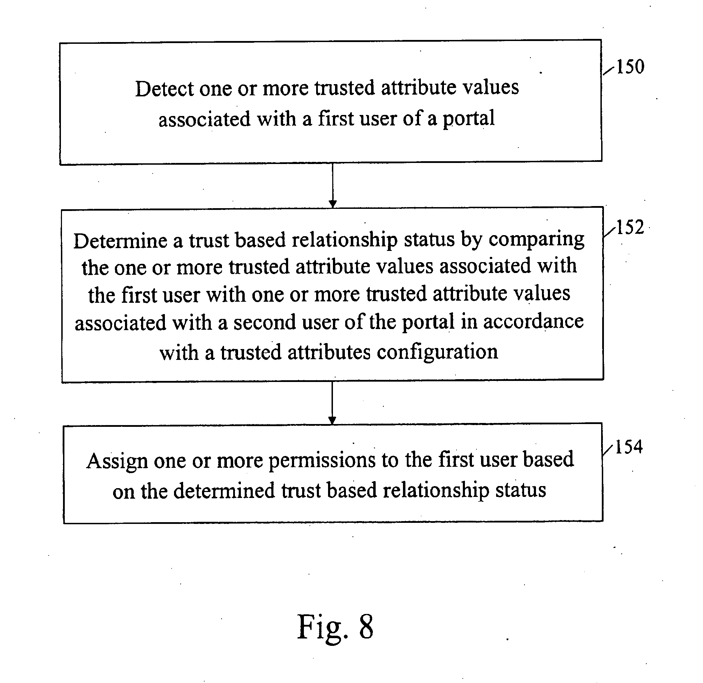

FIG. 8 describes a method of automatically assigning permissions to a portal user, such as a restricted user, based on one or more determined trust based relationships. One or more trusted attribute values associated with a first user are detected (150). The detected one or more trusted attribute values associated with the first user are compared with one or more trusted attribute values associated with a second portal user in accordance with a trusted attributes configuration in order to determine a trust based relationship status (152). Based on the determined trust based relationship status, one or more permissions are then assigned to the first user (154).

Various implementations of the systems and techniques described here can be realized in digital electronic circuitry, integrated circuitry, computer hardware, firmware, software, and/or combinations thereof. These various implementations can include one or more computer programs that are executable and/or interpretable on a programmable system including at least one programmable processor, which may be special or general purpose, coupled to receive data and instructions from, and to transmit data and instructions to, a storage system, at least one input device, and at least one output device.

The software (also known as programs, software tools, or code) may include machine instructions for a programmable processor, and can be implemented in a high-level procedural and/or object-oriented programming language, and/or in assembly/machine language. As used herein, the term "machine-readable medium" refers to any computer program product, apparatus, and/or device (e.g., magnetic disks, optical disks, memory, programmable logic devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The systems and techniques described here can be implemented in a computing system that includes a back end component (e.g., a data server), or that includes a middleware component (e.g., an application server), or that includes a front end component (e.g., a client computer having a graphical user interface, portal, or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), a campus area network (CAN), a mobile communication network using a multiple access technology (e.g., a cellular telephone network with code division multiple access (CDMA)), and the Internet.

## Claims

1. A computer program product for controlling access in a portal comprising instructions operable to cause one or more data processing apparatus to perform operations comprising:
detecting one or more trusted attribute values (60, 66) corresponding to specific trusted attribute fields and associated with a first user (56, 62) of a portal (12);
determining a trust based relationship status (68, 70) by comparing the detected one or more trusted attribute values (60, 66) associated with the first user (56, 62) with one or more trusted attribute values (54) corresponding to specific trusted attribute fields and associated with a second user (50) of the portal (12); and
assigning one or more permissions to the first user (56, 62) based on the determined trust based relationship status (68, 70),
**characterized in that** the trust based relationship status (68, 70) is determined in accordance with a trusted attributes configuration (80) comprising an asymmetric trusted attribute comparison (84) that identifies a trusted attribute value (60, 66) associated with the first user (56, 62) that is to be compared with a trusted attribute value (54) associated with the second user (50) such that the trusted attribute values that are to be compared correspond to different trusted attribute fields (58, 64; 52).

2. The computer program product of claim 1, wherein the portal (12) comprises an external facing portal.

3. The computer program product of claim 1 or 2, wherein the instructions are further operable to cause the one or more data processing apparatus to perform operations comprising:
assigning one or more permissions to the second user (50) based on the determined trust based relationship status (68, 70).

4. The computer program product of anyone of the preceding claims, wherein the instructions are further operable to cause the one or more data processing apparatus to perform operations comprising:
controlling the ability of the first user (56, 62) to access information made available in the portal (12) based on the one or more permissions assigned to the first user (56, 62).

5. The computer program product of anyone of the preceding claims, wherein the instructions are further operable to cause the one or more data processing apparatus to perform operations comprising:
controlling the ability of the first user (56, 62) to see the second user (50) based on the one or more permissions assigned to the first user (56, 62).

6. The computer program product of anyone of the preceding claims, wherein the instructions are further operable to cause the one or more data processing apparatus to perform operations comprising:
comparing one or more trusted attribute values associated with the first user with one or more trusted attribute values associated with a plurality of users of the portal; and
determining the trust based relationship status between the first user and each of the plurality of users.

7. The computer program product of claim 6, wherein the instructions are further operable to cause the one or more data processing apparatus to perform operations comprising:
assigning one or more permissions to the first user based on each determined trust based relationship status.

8. The computer program product of anyone of the preceding claims, wherein the instructions are further operable to cause the one or more data processing apparatus to perform operations comprising:
identifying a plurality of users of the portal who share a common trusted attribute value; and
creating a virtual group comprised of the plurality of users.

9. The computer program product of claim 8, wherein a user can belong to a plurality of virtual groups.

10. A computer-implemented method for controlling access in a portal comprising:
detecting (150) one or more trusted attribute values (60, 66) corresponding to specific trusted attribute fields and associated with a first user (56, 62) of a portal;
determining (152) a trust based relationship status (68, 70) by comparing the detected one or more trusted attribute values (60, 66) associated with the first user (56, 62) with one or more trusted attribute values (54) corresponding to specific trusted attribute fields and associated with a second user (50) of the portal (12); and
assigning (154) one or more permissions to the first user (56, 62) based on the determined trust based relationship status (68, 70),
**characterized in that** the trust based relationship status (68, 70) is determined in accordance with a trusted attributes configuration (80) comprising an asymmetric trusted attribute comparison (84) that identifies a trusted attribute value (60, 66) associated with the first user (56, 62) that is to be compared with a trusted attribute value (54) associated with the second user (50) such that the trusted attribute values that are to be compared correspond to different trusted attribute fields (58, 64; 52).

11. The computer-implemented method of claim 10, further comprising:
controlling the ability of the first user to access information made available in the portal based on the one or more permissions assigned to the first user.

12. The computer-implemented method of claim 10 or 11, further comprising:
controlling the ability of the first user to see the second user based on the one or more permissions assigned to the first user.

13. The computer-implemented method of claim 10, 11 or 12, further comprising:
comparing one or more trusted attribute values associated with the first user with one or more trusted attribute values associated with a plurality of users of the portal; and
determining the trust based relationship status between the first user and each of the plurality of users.

14. The computer-implemented method of claim 13, further comprising:
assigning one or more permissions to the first user based on each determined trust based relationship status.

15. The computer-implemented method of anyone of the preceding claims, further comprising:
identifying a plurality of users of the portal who share a common trusted attribute value; and
creating a virtual group comprised of the plurality of users

16. A system for controlling access in a portal, the system comprising:
one or more communication paths (22, 32) to permit a plurality of users to connect to a portal (12);
means adapted to detect one or more trusted attributes values (60, 66) corresponding to specific trusted attribute fields and associated with a first user (56, 62) of the portal (12);
means adapted to determine a trust based relationship status (68, 70) by comparing the detected one or more trusted attribute values (60, 66) associated with the first user (56, 62) with one or more trusted attribute values (54) corresponding to specific trusted attribute fields and associated with a second user (50) of the portal (12); and
means adapted to assign one or more permissions to the first user (56, 62) based on the determined trust based relationship status (68, 70),
**characterized in that** the means for determining the trust based relationship status (68, 70) is adapted to determine the trust based relationship status (68, 70) in accordance with a trusted attributes configuration (80) comprising an asymmetric trusted attribute comparison (84) that identifies a trusted attribute value (60, 66) associated with the first user (56, 62) that is to be compared with a trusted attribute value (54) associated with the second user (50) such that the trusted attribute values that are to be compared correspond to different trusted attribute fields (58, 64; 52).

17. The system in accordance with claim 16, further comprising:
means adapted to control the ability of the first user to access information made available in the portal based on the one or more permissions assigned to the first user.

18. The system in accordance with claim 16 or 17, further comprising:
means adapted to control the ability of the first user to see the second user based on the one or more permissions assigned to the first user.

19. The system in accordance with claim 16, 17 or 18, further comprising:
means adapted to compare one or more trusted attribute values associated with the first user with one or more trusted attribute values associated with a plurality of users of the portal; and
means adapted to determine the trust based relationship status between the first user and each of the plurality of users.

20. The system in accordance with claim 19, further comprising:
means adapted to assign one or more permissions to the first user based on each determined trust based relationship status.

## Patentansprüche

1. Computerprogrammprodukt zum Steuern bzw. Kontrollieren eines Zugriffs in einem Portal, umfassend Instruktionen, die betriebsfähig bzw. wirksam sind, um eine oder mehrere Datenverarbeitungsvorrichtungen zu veranlassen, Operationen durchzuführen, die umfassen:
Detektieren eines oder mehrerer vertrauenswürdiger Attributwerte (60, 66), die spezifischen, vertrauenswürdigen Attributfeldern entsprechen und mit einem ersten Benutzer (56, 62) eines Portals (12) assoziiert bzw. verknüpft sind;
Bestimmen eines vertrauensbasierten Beziehungsstatus (68, 70) durch Vergleichen des detektierten einen oder der detektierten mehreren vertrauenswürdigen Attributwerte (60, 66), die mit dem ersten Benutzer (56, 62) verknüpft sind, mit einem oder mehreren vertrauenswürdigen Attributwerten (54), die spezifischen, vertrauenswürdigen Attributfeldern entsprechen und mit einem zweiten Benutzer (50) des Portals (12) assoziiert bzw. verknüpft sind; und
Zuweisen einer oder mehrerer Berechtigungen an den ersten Benutzer (56, 62) basierend auf dem bestimmten, vertrauensbasierten Beziehungsstatus (68, 70),
**dadurch gekennzeichnet, dass** der vertrauensbasierte Beziehungsstatus (68, 70) gemäß einer vertrauenswürdigen Attributekonfiguration (80) bestimmt wird, die einen asymmetrischen Vergleich (84) vertrauenswürdiger Attribute umfasst, der ein mit dem ersten Benutzer (56, 62) verknüpftes vertrauenswürdiges Attribut (60, 66) identifiziert, das mit einem vertrauenswürdigen Attribut (54) zu vergleichen ist, das mit dem zweiten Benutzer (50) verknüpft ist, so dass die zu vergleichenden vertrauenswürdigen Attributwerte unterschiedlichen vertrauenswürdigen Attributfeldern (58, 64; 52) entsprechen.

2. Computerprogrammprodukt nach Anspruch 1, wobei das Portal (12) ein External Facing Portal umfasst.

3. Computerprogrammprodukt nach Anspruch 1 oder 2, wobei die Instruktionen ferner betriebsfähig bzw. wirksam sind, um die eine oder mehreren Datenverarbeitungsvorrichtung zu veranlassen, Operationen durchzuführen, die umfassen:
Zuweisen einer oder mehrerer Berechtigungen an den zweiten Benutzer (50) basierend auf dem bestimmten, vertrauensbasierten Beziehungsstatus (68, 70).

4. Computerprogrammprodukt nach einem der vorhergehenden Ansprüche, wobei die Instruktionen ferner betriebsfähig bzw. wirksam sind, um die eine oder mehreren Datenverarbeitungsvorrichtung zu veranlassen, Operationen durchzuführen, die umfassen:
Steuern bzw. Kontrollieren der Fähigkeit des ersten Benutzers (56, 62), auf Informationen zuzugreifen, die in dem Portal (12) zur Verfügung gestellt werden, und zwar basierend auf der einen oder den mehreren Berechtigungen, die dem ersten Benutzer (56, 62) zugewiesen wurden.

5. Computerprogrammprodukt nach einem der vorhergehenden Ansprüche, wobei die Instruktionen ferner betriebsfähig bzw. wirksam sind, um die eine oder mehreren Datenverarbeitungsvorrichtung zu veranlassen, Operationen durchzuführen, die umfassen:
Steuern bzw. Kontrollieren der Fähigkeit des ersten Benutzers (56, 62), den zweiten Benutzer (50) zu sehen, und zwar basierend auf der einen oder den mehreren Berechtigungen, die dem ersten Benutzer (56, 62) zugewiesen wurden.

6. Computerprogrammprodukt nach einem der vorhergehenden Ansprüche, wobei die Instruktionen ferner betriebsfähig bzw. wirksam sind, um die eine oder mehreren Datenverarbeitungsvorrichtung zu veranlassen, Operationen durchzuführen, die umfassen:
Vergleichen eines oder mehrerer vertrauenswürdiger Attributwerte, die mit dem ersten Benutzer verknüpft sind, mit einem oder mehreren vertrauenswürdigen Attributwerten, die mit einer Mehrzahl von Benutzern des Portals verknüpft sind; und
Bestimmen des vertrauensbasierten Beziehungsstatus zwischen dem ersten Benutzer und jedem der Mehrzahl von Benutzern.

7. Computerprogrammprodukt nach Anspruch 6, wobei die Instruktionen ferner betriebsfähig bzw. wirksam sind, um die eine oder mehreren Datenverarbeitungsvorrichtung zu veranlassen, Operationen durchzuführen, die umfassen:
Zuweisen einer oder mehrerer Berechtigungen an den ersten Benutzer basierend auf jedem bestimmten, vertrauensbasierten Beziehungsstatus.

8. Computerprogrammprodukt nach einem der vorhergehenden Ansprüche, wobei die Instruktionen ferner betriebsfähig bzw. wirksam sind, um die eine oder mehreren Datenverarbeitungsvorrichtung zu veranlassen, Operationen durchzuführen, die umfassen:
Identifizieren einer Mehrzahl von Benutzern des Portals, die einen gemeinsamen vertrauenswürdigen Attributwert teilen; und
Erstellen einer virtuellen Gruppe, die aus der Mehrzahl von Benutzern besteht.

9. Computerprogrammprodukt nach Anspruch 8, wobei ein Benutzer zu einer Mehrzahl virtueller Gruppen gehören kann.

10. Computerimplementiertes Verfahren zum Steuern bzw. Kontrollieren eines Zugriffs in einem Portal, umfassend:
Detektieren (150) eines oder mehrerer vertrauenswürdiger Attributwerte (60, 66), die spezifischen, vertrauenswürdigen Attributfeldern entsprechen und mit einem ersten Benutzer (56, 62) eines Portals assoziiert bzw. verknüpft sind;
Bestimmen (152) eines vertrauensbasierten Beziehungsstatus (68, 70) durch Vergleichen des detektierten einen oder der detektierten mehreren vertrauenswürdigen Attributwerte (60, 66), die mit dem ersten Benutzer (56, 62) verknüpft sind, mit einem oder mehreren vertrauenswürdigen Attributwerten (54), die spezifischen, vertrauenswürdigen Attributfeldern entsprechen und mit einem zweiten Benutzer (50) des Portals (12) assoziiert bzw. verknüpft sind; und
Zuweisen (154) einer oder mehrerer Berechtigungen an den ersten Benutzer (56, 62) basierend auf dem bestimmten, vertrauensbasierten Beziehungsstatus (68, 70),
**dadurch gekennzeichnet, dass** der vertrauensbasierte Beziehungsstatus (68, 70) gemäß einer vertrauenswürdigen Attributekonfiguration (80) bestimmt wird, die einen asymmetrischen Vergleich (84) vertrauenswürdiger Attribute umfasst, der ein mit dem ersten Benutzer (56, 62) verknüpftes vertrauenswürdiges Attribut (60, 66) identifiziert, das mit einem vertrauenswürdigen Attribut (54) zu vergleichen ist, das mit dem zweiten Benutzer (50) verknüpft ist, so dass die zu vergleichenden vertrauenswürdigen Attributwerte unterschiedlichen vertrauenswürdigen Attributfeldern (58, 64; 52) entsprechen.

11. Computerimplementiertes Verfahren nach Anspruch 10, ferner umfassend:
Steuern bzw. Kontrollieren der Fähigkeit des ersten Benutzers, auf Informationen zuzugreifen, die in dem Portal zur Verfügung gestellt werden, und zwar basierend auf der einen oder den mehreren Berechtigungen, die dem ersten Benutzer zugewiesen wurden.

12. Computerimplementiertes Verfahren nach Anspruch 10 oder 11, ferner umfassend:
Steuern bzw. Kontrollieren der Fähigkeit des ersten Benutzers, den zweiten Benutzer zu sehen, und zwar basierend auf der einen oder den mehreren Berechtigungen, die dem ersten Benutzer zugewiesen wurden.

13. Computerimplementiertes Verfahren nach Anspruch 10, 11 oder 12, ferner umfassend:
Vergleichen eines oder mehrerer vertrauenswürdiger Attributwerte, die mit dem ersten Benutzer verknüpft sind, mit einem oder mehreren vertrauenswürdigen Attributwerten, die mit einer Mehrzahl von Benutzern des Portals verknüpft sind; und
Bestimmen des vertrauensbasierten Beziehungsstatus zwischen dem ersten Benutzer und jedem der Mehrzahl von Benutzern.

14. Computerimplementiertes Verfahren nach Anspruch 13, ferner umfassend:
Zuweisen einer oder mehrerer Berechtigungen an den ersten Benutzer basierend auf jedem bestimmten, vertrauensbasierten Beziehungsstatus.

15. Computerimplementiertes Verfahren nach einem der vorhergehenden Ansprüche, ferner umfassend:
Identifizieren einer Mehrzahl von Benutzern des Portals, die einen gemeinsamen vertrauenswürdigen Attributwert teilen; und
Erstellen einer virtuellen Gruppe, die aus der Mehrzahl von Benutzern besteht.

16. System zum Steuern bzw. Kontrollieren eines Zugriffs in einem Portal, umfassend:
einen oder mehrere Kommunikationspfade bzw. -wege (22, 32), um einer Mehrzahl von Benutzern zu erlauben, sich mit einem Portal (12) zu verbinden;
Mittel, die angepasst sind, eines oder mehrere vertrauenswürdige Attributwerte (60, 66) zu detektieren, die spezifischen, vertrauenswürdigen Attributfeldern entsprechen und mit einem ersten Benutzer (56, 62) des Portals (12) assoziiert bzw. verknüpft sind;
Mittel, die angepasst sind, einen vertrauensbasierten Beziehungsstatus (68, 70) durch Vergleichen des detektierten einen oder der detektierten mehreren vertrauenswürdigen Attributwerte (60, 66), die mit dem ersten Benutzer (56, 62) verknüpft sind, mit einem oder mehreren vertrauenswürdigen Attributwerten (54), die spezifischen, vertrauenswürdigen Attributfeldern entsprechen und mit einem zweiten Benutzer (50) des Portals (12) assoziiert bzw. verknüpft sind, zu bestimmen; und
Mittel, die angepasst sind, dem ersten Benutzer (56, 62) eine oder mehrere Berechtigungen basierend auf dem bestimmten, vertrauensbasierten Beziehungsstatus (68, 70) zuzuweisen,
**dadurch gekennzeichnet, dass** die Mittel zum Bestimmen des vertrauensbasierte Beziehungsstatus (68, 70) angepasst sind, den vertrauensbasierte Beziehungsstatus (68, 70) gemäß einer vertrauenswürdigen Attributekonfiguration (80) zu bestimmen, die einen asymmetrischen Vergleich (84) vertrauenswürdiger Attribute umfasst, der ein mit dem ersten Benutzer (56, 62) verknüpftes vertrauenswürdiges Attribut (60, 66) identifiziert, das mit einem vertrauenswürdigen Attribut (54) zu vergleichen ist, das mit dem zweiten Benutzer (50) verknüpft ist, so dass die zu vergleichenden vertrauenswürdigen Attributwerte unterschiedlichen vertrauenswürdigen Attributfeldern (58, 64; 52) entsprechen.

17. System nach Anspruch 16, ferner umfassend:
Mittel, die angepasst sind, die Fähigkeit des ersten Benutzers, auf Informationen zuzugreifen, die in dem Portal zur Verfügung gestellt werden, zu steuern bzw. zu kontrollieren, und zwar basierend auf der einen oder den mehreren Berechtigungen, die dem ersten Benutzer zugewiesen wurden.

18. System nach Anspruch 16 oder 17, ferner umfassend:
Mittel, die angepasst sind, die Fähigkeit des ersten Benutzers, den zweiten Benutzer zu sehen, zu steuern bzw. zu regeln, und zwar basierend auf der einen oder den mehreren Berechtigungen, die dem ersten Benutzer zugewiesen wurden.

19. System nach Anspruch 16, 17 oder 18, ferner umfassend:
Mittel, die angepasst sind, einen oder mehrere vertrauenswürdige Attributwerte, die mit dem ersten Benutzer verknüpft sind, mit einem oder mehreren vertrauenswürdigen Attributwerten zu vergleichen, die mit einer Mehrzahl von Benutzern des Portals verknüpft sind; und
Mittel, die angepasst sind, den vertrauensbasierten Beziehungsstatus zwischen dem ersten Benutzer und jedem der Mehrzahl von Benutzern zu bestimmen.

20. System nach Anspruch 19, ferner umfassend:
Mittel, die angepasst sind, dem ersten Benutzer eine oder mehrere Berechtigungen basierend auf jedem bestimmten, vertrauensbasierten Beziehungsstatus zuzuweisen.

## Revendications

1. Produit de programme d'ordinateur pour contrôler l'accès à un portique, comprenant des instructions qui peuvent fonctionner pour provoquer qu'un appareil de traitement des données accomplisse, ou que plusieurs appareils de traitement des données accomplissent des opérations comprenant :
la détection d'une valeur d'attribut de confiance qui correspond ou de plusieurs valeurs d'attribut de confiance (60, 66) qui correspondent à des champs d'attribut de confiance spécifiques et laquelle est associée (lesquelles sont associées) à un premier utilisateur (56, 62) d'un portique (12) ;
la détermination d'un état de relation basé sur la confiance (68, 70) par la comparaison de la une valeur d'attribut de confiance détectée ou des plusieurs valeurs d'attribut de confiance détectées (60, 66) associée (associées) au premier utilisateur (56, 62) à la une valeur d'attribut de confiance (aux plusieurs valeurs d'attribut de confiance) (54) qui correspond (correspondent) aux champs d'attribut de confiance spécifiques et qui est associée (sont associées) à un second utilisateur (50) du portique (12) ; et
l'attribution d'une permission ou de plusieurs permissions au premier utilisateur (56, 62) sur la base de l'état de relation basé sur la confiance (68, 70),
**caractérisé en ce que** l'état de relation basé sur la confiance (68, 70) est déterminé en conformité avec une configuration d'attributs de confiance (80) qui comprend une comparaison d'attribut de confiance asymétrique (84), laquelle identifie une valeur d'attribut de confiance (60, 66) qui est associée au premier utilisateur (56, 62) et qui doit être comparée à une valeur d'attribut de confiance (54) associée au second utilisateur (50) de telle sorte que les valeurs d'attribut de confiance qui doivent être comparées correspondent aux différents champs d'attribut de confiance (58, 64 ; 52).

2. Produit de programme d'ordinateur selon la revendication 1, dans lequel le portique (12) comprend un portique externe opposé.

3. Produit de programme d'ordinateur selon l'une ou l'autre des revendications 1 et 2, dans lequel les instructions peuvent en outre fonctionner pour provoquer que le un appareil de traitement des données accomplisse, ou que les plusieurs appareils de traitement des données accomplissent des opérations comprenant :
l'attribution d'une permission ou de plusieurs permissions au second utilisateur (50) sur la base de l'état de relation basé sur la confiance (68, 70).

4. Produit de programme d'ordinateur selon l'une quelconque des revendications précédentes, dans lequel les instructions peuvent en outre fonctionner pour provoquer que le un appareil de traitement des données accomplisse, ou que les plusieurs appareils de traitement des données accomplissent des opérations comprenant :
le contrôle de la capacité du premier utilisateur (56, 62) à accéder à l'information rendue disponible dans le portique (12) sur la base de la une permission attribuée ou des plusieurs permissions attribuées au premier utilisateur (56, 62).

5. Produit de programme d'ordinateur selon l'une quelconque des revendications précédentes, dans lequel les instructions peuvent en outre fonctionner pour provoquer que le un appareil de traitement des données accomplisse, ou que les plusieurs appareils de traitement des données accomplissent des opérations comprenant :
le contrôle de la capacité du premier utilisateur (56, 62) à voir le second utilisateur (50) sur la base de la une permission attribuée ou des plusieurs permissions attribuées au premier utilisateur (56, 62).

6. Produit de programme d'ordinateur selon l'une quelconque des revendications précédentes, dans lequel les instructions peuvent en outre fonctionner pour provoquer que le un appareil de traitement des données accomplisse, ou que les plusieurs appareils de traitement des données accomplissent des opérations comprenant :
la comparaison de la une valeur d'attribut de confiance associée ou des plusieurs valeurs d'attribut de confiance associées au premier utilisateur à une valeur d'attribut de confiance associée ou aux plusieurs valeurs d'attribut de confiance associées à une pluralité d'utilisateurs du portique ; et
la détermination de l'état de relation basé sur la confiance entre le premier utilisateur et chaque utilisateur parmi la pluralité d'utilisateurs.

7. Produit de programme d'ordinateur selon l'une quelconque des revendications précédentes, dans lequel les instructions peuvent en outre fonctionner pour provoquer que le un appareil de traitement des données accomplisse, ou que les plusieurs appareils de traitement des données accomplissent des opérations comprenant :
l'attribution d'une permission ou de plusieurs permissions au premier utilisateur sur la base de chaque état de relation basé sur la confiance et déterminé.

8. Produit de programme d'ordinateur selon l'une quelconque des revendications précédentes, dans lequel les instructions peuvent en outre fonctionner pour provoquer que le un appareil de traitement des données accomplisse, ou que les plusieurs appareils de traitement des données accomplissent des opérations comprenant :
l'identification d'une pluralité d'utilisateurs du portique qui se partagent une valeur d'attribut de confiance commune ; et
la création d'un groupe virtuel constitué de la pluralité d'utilisateurs.

9. Produit de programme d'ordinateur selon la revendication 8, dans lequel un utilisateur peut appartenir à une pluralité de groupes virtuels.

10. Procédé implémenté par un ordinateur pour contrôler l'accès à un portique, comprenant :
la détection (150) d'une valeur d'attribut de confiance qui correspond ou de plusieurs valeurs d'attribut de confiance (60, 66) qui correspondent à des champs d'attribut de confiance spécifiques et qui est associée (sont associées) à un premier utilisateur (56, 62) d'un portique ;
la détermination (152) d'un état de relation basé sur la confiance (68, 70) par la comparaison de la une valeur d'attribut de confiance détectée ou des plusieurs valeurs d'attribut de confiance détectées (60, 66) associée (associées) au premier utilisateur (56, 62) à la une valeur d'attribut de confiance (aux plusieurs valeurs d'attribut de confiance) (54) qui correspond (correspondent) aux champs d'attribut de confiance spécifiques et qui est associée (sont associées) à un second utilisateur (50) du portique (12) ; et
l'attribution (154) d'une permission ou de plusieurs permissions au premier utilisateur (56, 62) sur la base de l'état de relation basé sur la confiance (68, 70),
**caractérisé en ce que** l'état de relation basé sur la confiance (68, 70) est déterminé en conformité avec une configuration d'attributs de confiance (80) qui comprend une comparaison d'attribut de confiance asymétrique (84), laquelle identifie une valeur d'attribut de confiance (60, 66) qui est associée au premier utilisateur (56, 62) et qui doit être comparée à une valeur d'attribut de confiance (54) associée au second utilisateur (50) de telle sorte que les valeurs d'attribut de confiance qui doivent être comparées correspondent aux différents champs d'attribut de confiance (58, 64 ; 52).

11. Procédé implémenté par un ordinateur selon la revendication 10, comprenant en outre :
le contrôle de la capacité du premier utilisateur à accéder à l'information rendue disponible dans le portique sur la base de la une permission attribuée ou des plusieurs permissions attribuées au premier utilisateur.

12. Procédé implémenté par un ordinateur selon l'une ou l'autre des revendications 10 et 11, comprenant en outre :
le contrôle de la capacité du premier utilisateur à voir le second utilisateur sur la base de la une permission attribuée ou des plusieurs permissions attribuées au premier utilisateur.

13. Procédé implémenté par un ordinateur selon l'une des revendications 10, 11 ou 12, comprenant en outre :
la comparaison de la une valeur d'attribut de confiance associée ou des plusieurs valeurs d'attribut de confiance associées au premier utilisateur à une valeur d'attribut de confiance associée ou aux plusieurs valeurs d'attribut de confiance associées à une pluralité d'utilisateurs du portique ; et
la détermination de l'état de relation basé sur la confiance entre le premier utilisateur et chaque utilisateur parmi la pluralité d'utilisateurs.

14. Procédé implémenté par un ordinateur selon la revendication 13, comprenant en outre :
l'attribution d'une permission ou de plusieurs permissions au premier utilisateur sur la base de chaque état de relation basé sur la confiance et déterminé.

15. Procédé implémenté par un ordinateur selon l'une quelconque des revendications précédentes, comprenant en outre :
l'identification d'une pluralité d'utilisateurs du portique qui se partagent une valeur d'attribut de confiance commune ; et
la création d'un groupe virtuel constitué de la pluralité d'utilisateurs.

16. Système pour contrôler l'accès à un portique, le système comprenant :
un chemin de communication ou plusieurs chemins de communication (22, 32) afin de permettre à une pluralité d'utilisateurs de se connecter à un portique (12) ;
un moyen adapté de manière à détecter une valeur d'attribut de confiance qui correspond ou plusieurs valeurs d'attribut de confiance (60, 66) qui correspondent à des champs d'attribut de confiance spécifiques et qui est associée (sont associées) à un premier utilisateur (56, 62) d'un portique (12) ;
un moyen adapté de manière à déterminer un état de relation basé sur la confiance (68, 70) par la comparaison de la une valeur d'attribut de confiance détectée ou des plusieurs valeurs d'attribut de confiance détectées (60, 66) associée (associées) au premier utilisateur (56, 62) à la une valeur d'attribut de confiance (aux plusieurs valeurs d'attribut de confiance) (54) qui correspond (correspondent) aux champs d'attribut de confiance spécifiques et qui est associée (sont associées) à un second utilisateur (50) du portique (12) ; et
un moyen adapté de manière à attribuer une permission ou plusieurs permissions au premier utilisateur (56, 62) sur la base de l'état de relation basé sur la confiance (68, 70),
**caractérisé en ce que** le moyen pour déterminer l'état de relation basé sur la confiance (68, 70) est adapté de manière à déterminer l'état de relation basé sur la confiance (68, 70) en conformité avec une configuration d'attributs de confiance (80) qui comprend une comparaison d'attribut de confiance asymétrique (84), laquelle identifie une valeur d'attribut de confiance (60, 66) qui est associée au premier utilisateur (56, 62) et qui doit être comparée à une valeur d'attribut de confiance (54) associée au second utilisateur (50) de telle sorte que les valeurs d'attribut de confiance qui doivent être comparées correspondent aux différents champs d'attribut de confiance (58, 64 ; 52).

17. Système en conformité avec la revendication 16, comprenant en outre :
un moyen adapté de manière à contrôler la capacité du premier utilisateur à accéder à l'information rendue disponible dans le portique sur la base de la une permission attribuée ou des plusieurs permissions attribuées au premier utilisateur.

18. Système en conformité avec l'une ou l'autre des revendications 16 et 17, comprenant en outre :
un moyen adapté de manière à contrôler la capacité du premier utilisateur à voir le second utilisateur sur la base de la une permission attribuée ou des plusieurs permissions attribuées au premier utilisateur.

19. Système en conformité avec l'une ou l'autre des revendications 16, 17 ou 18, comprenant en outre :
un moyen adapté de manière à comparer la une valeur d'attribut de confiance associée ou les plusieurs valeurs d'attribut de confiance associées au premier utilisateur à une valeur d'attribut de confiance associée ou aux plusieurs valeurs d'attribut de confiance associées à une pluralité d'utilisateurs du portique ; et
un moyen adapté de manière à déterminer l'état de relation basé sur la confiance entre le premier utilisateur et chaque utilisateur parmi la pluralité d'utilisateurs.

20. Système en conformité avec la revendication 19, comprenant en outre :
un moyen adapté de manière à attribuer une permission ou plusieurs permissions au premier utilisateur sur la base de chaque état de relation basé sur la confiance et déterminé.
